(19) Europäisches Patentamt
European Patent Office
Office européen des brevets

(11) **EP 1 475 931 B1**

(12) **EUROPEAN PATENT SPECIFICATION**

(45) Date of publication and mention
of the grant of the patent:
**18.12.2013 Bulletin 2013/51**

(51) Int Cl.:
***H04L 25/02*** (2006.01)

(21) Application number: **03010507.6**

(22) Date of filing: **09.05.2003**

(54) **Method and apparatus for iterative estimation of channel- or filter-coefficients**

Methode und Apparat zur iterativen Schätzung von Filter- oder Kanalkoeffizienten

Méthode et appareil d'estimation par itération des coefficients de canal ou de filtrage

(84) Designated Contracting States:
**DE FR GB IT**

(43) Date of publication of application:
**10.11.2004 Bulletin 2004/46**

(73) Proprietor: **Hewlett-Packard Development Company, L.P.**
**Houston, TX 77707 (US)**

(72) Inventors:
• **Krakowski, Claudiu**
 **82194 Gröbenzell (DE)**
• **Xu, Wen, Dr.**
 **82008 Unterhaching (DE)**

(74) Representative: **WP Thompson**
 **55 Drury Lane**
 **London**
 **WC2B 5SQ (GB)**

(56) References cited:
**WO-A2-96/08881**

• **STEVEN M. KAY: "Fundamentals of Statistical Signal Processing - Estimation Theory" 1993 , PRENTICE-HALL, INC. , ENGLEWOOD CLIFFS, NEW JERSEY XP002254232 ISBN: 0-13-042268-1 * chapter 8.6 ***
• **WON Y K ET AL: "Variable LMS Algorithms Using the Time Constant Concept" IEEE TRANSACTIONS ON CONSUMER ELECTRONICS, 21 June 1994 (1994-06-21), pages 300-301, XP010218376**
• **BILCU R C ET AL: "A new variable length lms algorithm: theoretical analysis and implementations" , VOL. 3, PAGE(S) 1031-1034 XP010614528 * abstract * * sections 1 and 4 * * figure 1 ***
• **Z. PRITZKER ET AL: 'Variable length stochastic gradient algorithm' IEEE TRANSACTIONS ON SIGNAL PROCESSING vol. 39, no. 4, 01 April 1991, pages 997 - 1001, XP055062791 DOI: 10.1109/78.80936 ISSN: 1053-587X**
• **Markku Pukkila: "Channel Estimation Modeling (S-72-333 Postgraduate Course in Radiocommunications)", , 31 December 2000 (2000-12-31), XP055065328, Retrieved from the Internet: URL:http://www.comlab.hut.fi/opetus/ 260/ch an_est.pdf [retrieved on 2013-06-05]**

**Description**

## FIELD OF THE INVENTION

The invention deals with an efficient method and apparatus for iterative or recursive estimation of channel impulse response (CIR) (which is also referred to as channel coefficients, channel taps, etc.) or coefficients of an recursive or iterative adaptive filter. The method can especially be employed in iterative/recursive channel equalization, interference cancellation, adaptive filtering, etc.

## BACKGROUND OF THE INVENTION

In practice, the CIR is assumed to be of a known finite length (or taps, or order), say $L$. Various methods exist to estimate the channel coefficients. One of the computationally most efficient methods is the so-called iterative or recursive estimation. In each iterative stage, a fixed number of channel coefficients, $L+1$, is assumed. This may result in relatively higher computational complexity and slower convergence, and consequently performance loss.

STEVEN M. KAY: 'Fundamentals of Statistical Signal Processing - Estimation Theory' 1993, PRENTICE-HALL, INC.. ENGLEWOOD CLIFFS, NEW JERSEY XP002254232 ISBN: 0-13-042268-1 relates to an order-recursive least squares algorithm.

WON Y K ET AL: 'Variable LMS Algorithms Using the Time Constant Concept' IEEE TRANSACTIONS ON CONSUMER ELECTRONICS, 21 June 1994 (1994-06-21), pages 300-301, XP010218376 relates to variable LMS algorithms using the time constant concept.

BILCU R C ET AL: 'A new variable length LMS algorithm: theoretical analysis and implementations', VOL. 3, PAGE(S) 1031-1034 XP010614528 relates to finding the optimum length for the adaptive LMS filter.

WO96/08881 relates to a reception method and a receiver.

Z. Pritzker ET AL: "Variable length stochastic gradient algorithm", IEEE Transactions on Signal Processing, vol. 39, no. 4, 1 April 1991 (1991-04-01), pages 997-1001, XP55062791, ISSN: 1053-587X relates to a variable length stochastic gradient algorithm.

### Summary of Invention

According to an embodiment of the present invention, there is provided a method for iterative estimation of L+1 channel coefficients ($\underline{h},g$) where h represents the channel coefficients of the desired user and g represents the channel coefficients of the interfering user, of a channel for a burst of fixed length comprising at least a mid-amble part, characterized in that a first number M<L+1 of desired user's channel coefficients ($\underline{h}$) are initially estimated using a least squares channel estimation algorithm and a second number N=(L+1)-M of desired user's channel coefficients are set to zero; and that the M desired user's channel coefficients initially estimated and the N desired user's channel coefficients set to zero are used as initial estimates of desired user's channel coefficients ($\underline{h}$), wherein the estimates ($\hat{\underline{h}},\hat{g}$) of the channel coefficients ($\underline{h},g$) are iteratively updated using an LMS algorithm defined by the equations:

$$\hat{\underline{h}}(k+1)=\hat{\underline{h}}(k)+\Delta(k)e(k)\hat{\underline{a}}^*(k-\delta);$$

and

$$\hat{g}(k+1)=\hat{g}(k)+\Delta(k)e(k)\hat{\underline{b}}^*(k-\delta)$$

where k is the time index, $\underline{a}^*(k-\delta)$ and $\hat{\underline{b}}^*(k-\delta)$ are tentative decisions of the data sequences of desired users and interferers respectively, e(k) is a common error signal, $\Delta(k)$ is the step size of the LMS algorithm and $\delta$ is a decision delay, wherein the iterative update is iterated over the length of the mid-amble part of the burst.

## OBJECTS, SUMMARY AND ADVANTAGES OF THE INVENTION

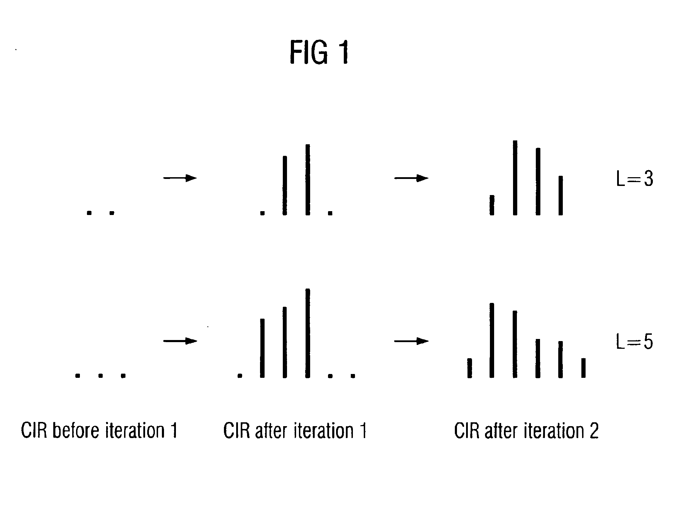

We propose an efficient approach for iterative estimation of the channel coefficients, referred to as *expanding*. The basic idea is to start the estimation with a reduced channel length and increase the number of channel taps with each iteration. E.g. as shown in Fig. 1, we have a channel with memory length $L = 3$ (i.e. the channel has $L+1 = 4$ taps). In the first iteration, only the 2 middle channel taps are updated, while in the second iteration all 4 channel taps are updated. In other words, we pad up in the second iteration the two tap CIR with two zeros on the left and right side, resulting in 4 channel coefficients. These 4 channel coefficients are then used as initial estimation of the channel coefficients in the second iteration. Generation of the proposed algorithm is straight forward (see Fig. 1).

Due to the optimization criteria used in coefficient estimation, e.g. the least mean square (LMS) algorithm, the channel coefficients estimated in each iteration normally represents the main lobe of the CIR. Due to the expanding process (i.e. padding zeros on either side of the main lobe of the CIR), the dominant taps will be automatically included in the estimated CIR. As such, better convergence and overall performance can be achieved.

Advantages of the proposed method:

- *Lower Computational Complexity:* In our example shown in Fig. 1, only two taps need to be estimated in the first iteration for the expanding method (i.e. only $2^{2-1}=2$ states need to be considered in the Viterbi Algorithm/VA), whereas in the conventional iterative channel estimation methods with fixed $L+1 = 4$ taps in each iteration, 4 taps have to be estimated in the all iterations (i.e. $2^{4-1}=8$ states need to be considered in the VA).

- *Better Convergence:* With less parameters to be estimated, the LMS will converge more quickly and more probably to the global extreme for the later iterations, thus resulting in overall better performance. This has been confirmed in our simulations. A better performance can be obtained especially in case of multiple co-channel interferers and when the joint detection algorithm is designed to cancel one interferer, i.e. to the dominant interferer.

- *More effective* in combating the so-called "shift ambiguity" (see below "5. Application in CoChannel Interference Cancellation").

The method described above can also be used for estimation of parameters of an adaptive filter which is used, e.g. in prefilter interference suppression. In those cases, a complex LS algorithm is necessary for computing parameters where a computation-intensive matrix inversion is usually necessary. With the expanding method and iterations within midamble, the filter parameters can then be calculated more efficiently (with less computational efforts) by means of a simpler LMS algorithm.

## BRIEF DESCRIPTION OF THE DRAWINGS

The above set forth and other features of the invention are made more apparent in the ensuing Detailed Description of the Invention when read in conjunction with the attached Drawings, wherein

Fig. 1 shows the number of channel coefficients to be estimated in successive iterations (memory length $L = 3$ and $L = 5$);

Fig. 2 shows the structure of a GSM burst and a sketch of the update process of the parallel channel estimation and data detection;

Fig. 3 shows the structure of a GSM burst and a sketch of the update process of the sequential channel estimation and data detection:

## DETAILED DESCRIPTION OF THE INVENTION

### Application the Invention in Co-Channel Interference (CCI-) Cancellation

In TDMA cellular mobile radio systems, frequency-reuse is applied, i.e., one carrier frequency is used in several cells. This leads to a perturbation of the received signal with one or more interfering signals from nearby cells. The interference caused by overlapping in the frequency domain is called *cochannel interference* (CCI). With CCI cancellation, the capacity of mobile radio systems can be increased significantly.

There are two main concepts to combat CCI and ISI - interference rejection and multiuser detection [1]. The first concept (i.e., interference rejection) is based on adaptively combining filtered received sequences before conventional equalization [2], [3], [4], [5], [6], [7], [8], [9], [10], [11]. For all of these techniques, multiple receiving antennas are a prerequisite, either conceptionally or to achieve satisfactory performance.

The second concept (i.e., multi-user detection) is based on the simultaneous detection of the desired user and the interfering users. Giridhar et al. presented a detector based on the *Viterbi algorithm* (VA) for joint estimation of cochannel signals [12], [13], which we will refer to as *joint Viterbi detector* (JVD) throughout this paper. Given perfect knowledge of the *channel impulse responses* (CIRs) of the desired user and all interfering users, JVD is optimal in the sense of the *maximum-likelihood* (ML) criterion [14], [15] and can therefore be referred to as *joint maximum-likelihood sequence estimation* (JMLSE). The complexity of JMLSE can be reduced by means of truncating the CIRs [16], among other techniques.

In practice, the CIRs have to be estimated because they are a priori not known at the receiver. Ranta et al. examined the performance of JVD with channel estimates obtained by *joint least-squares channel estimation* (JLSCE) [17]. Given perfect knowledge of the data of all users during an observation interval, e.g., by means of overlapping training sequences, JLSCE is optimal with respect to the least-squares criterion. If the bursts of the interfering users are assumed to be asynchronous with respect to the desired user's burst, the shifts between the individual training sequences are usually unknown. In this case, the receiver is blind w.r.t. the data and the channel of the interfering users. Lo and Letaief [18] proposed a combination of the JVD and the *list Viterbi algorithm* (LVA) [19], [20] for this scenario. Channel estimation and tracking of the channel variations is done by the *recursive least-squares* (RLS) algorithm [21]. Channel estimation (CE) and sequence estimation are performed in a parallel manner.

A receiver based on an iterative algorithm for joint channel estimation and cochannel interference cancellation suitable for time-division multiple-access (TDMA) cellular radio systems is described below. The receiver is blind with respect to the data of the interfering users and training-based w.r.t the data of the desired user and it is therefore referred to as semi-blind. As opposed to concurrent receiver structures, where the number of receiving antennas must exceed the number of cochannel interferers, the proposed receiver is suitable for just one receiving antenna, i.e., the proposed receiver is also suitable for the downlink. Simulation results indicate that with just one receiving antenna and no oversampling the proposed receiver is able to operate at a signal-to-interference ratio of about 0 dB in asynchronous GSM networks given a single dominating interferer.

Since multiple receiving antennas are difficult to implement in the downlink, our focus is on a receiver that is flexible enough to use one or, optionally, multiple receiving antennas. Oversampling is also optional, but not mandatory. The proposed receiver is able to track time-varying fading channels. It is suitable for asynchronous networks.

## Channel Model

Throughout this document, the complex baseband notation is used. The baud-rate sampled outputs of linear transmission schemes without CCI can be described by the equivalent, discrete-time ISI channel model [22]

$$y(k) = \sum_{l=0}^{L} h_l(k) \cdot a(k-l) + n(k), \qquad (1)$$

where $k$ is the time index. The channel coefficients $h_l(k)$ comprise the pulse shaping filter, the physical time-varying multipath fading channel, the receiving filter, and the sampling. The finite channel memory length $L$ is assumed to be known at the receiver. The complex sequence $a(k)$ represents the data and the complex values $n(k)$ are additive white Gaussian-distributed noise samples of a random process with one-sided power spectral density $N_0$. An extension to oversampled systems is straightforward by means of polyphase channels.

Taking CCI into account, the received signal can be written as

$$y(k) = \sum_{l=0}^{L} h_l(k) \cdot a(k-l) + \sum_{j=1}^{J} \sum_{l=0}^{L_j} g_{l,j}(k) \cdot b_j(k-l) + n(k) \qquad (2)$$

The first term is the desired signal $y_d(k)$, the second term describes the interference signal $y_i(k)$ caused by $J$ interfering users. Every interfering user $j$ is associated with a CIR $g_{l,j}(k)$. The data sequences of the interfering users are given by $b_j(k)$. In accordance with the GSM testing conditions and for illustrative purposes, in the following emphasis is put on one dominating interferer ($J=1$) and the channel memory lengths of the desired and the interfering user are assumed to be equal. Generalizations are, however, straightforward. Whenever only one interfering user is considered, we will omit the user index j.

The signal-to-interference ratio (SIR), which is also referred to as CIR (carrier-to-interference ratio), is defined as:

$$SIR = E\{|y_d(k)|^2\} / E\{|y_i(k)|^2\} \qquad (3)$$

## Maximum-Likelihood Sequence and Channel Estimation

A suitable criterion for the estimation of channel coefficients and data sequences in noisy environments with intersymbol interference is the ML criterion. With this criterion, uncertain parameters are determined such that the probability of the received sequence given a set of hypotheses for the uncertain parameters is maximized [22]. In the case of Gaussian-distributed noise, this is equivalent to finding the set of hypotheses that minimizes the Euclidean distance with respect to the received signal. The ML criterion can easily be formulated to take CCI into account. For the channel model (2), ML estimation can be written as:

$$\hat{\Phi}_{ML} = \left(\hat{\underline{A}}, \hat{\underline{B}}_j, \hat{\underline{h}}, \hat{\underline{g}}_j; 1 \leq j \leq J\right)_{ML} = \arg\min_{\Phi} \left\{ \left\| \underline{y} - \tilde{\underline{A}} \cdot \tilde{\underline{h}} - \sum_{j=1}^{J} \tilde{\underline{B}}_j \cdot \tilde{\underline{g}}_j \right\|^2 \right\} \quad (4)$$

where $\underline{A}, \underline{B}_j$ are Toeplitz matrices representing the data and the column vectors $\underline{h} = [h_0, h_1, ..., h_L]^T$ and $\underline{g} = [g_{0,j}, g_{1,j}, ..., g_{L,j}]^T$ represent the channel coefficients for the desired and the interfering users. Throughout this document, hypotheses are identified by a tilde and estimates are identified by a hat. The underscore marks a column vector (lower case letter) or a matrix (capital letter). The ML solution $\hat{\Phi}_{ML}$ is the combination of hypotheses $\tilde{\Phi} = \left(\tilde{\underline{A}}, \tilde{\underline{B}}_j, \tilde{\underline{h}}, \tilde{\underline{g}}_j; 1 \leq j \leq J\right)$ that satisfies (4). Note that this combination does not have to be unique.

**Joint Maximum Likelihood Sequence Estimation**

For known channel vectors, (4) describes the JMLSE criterion. Due to its computational complexity (exponential in channel memory length $L$, number of interfering users $J$, and data sequence length $N_d$), an exhaustive search of the optimal sequence is prohibitive. The so-called Viterbi detector (VD), which is based on the well-known VA [23], is an efficient realization of the maximum likelihood sequence estimator (MLSE) if all CIRs are known. It can also be used for JVD by combining the channel states of the desired and the interfering users in one trellis [12]. The computational complexity of JVD is exponential w.r.t. $L$ and $J$ but only linear w.r.t. $N_d$.

**Joint Least Squares Channel Estimation**

As the channel coefficients are not known at the receiver, CE has to be applied. During the training sequence, the receiver has perfect knowledge of the data sequence of the desired user. With regard to the training sequences of the interfering users, four scenarios can be distinguished:

The training sequences of the interfering users are (i) known and synchronous (best case), (ii) known and asynchronous with known shift, (iii) known and asynchronous with unknown shift, or (iv) unknown (worst case). In the case of known and synchronous training sequences, JLSCE [17] can be applied:

$$\left[ \hat{\underline{h}}^T, \hat{\underline{g}}_1^T, \cdots, \hat{\underline{g}}_J^T \right]^T = \underbrace{\left(\underline{C}^H \cdot \underline{C}\right)^{-1} \cdot \underline{C}^H}_{\underline{C}^+} \cdot \underline{y} . \quad (5)$$

The joint data matrix $\underline{C} = [\underline{A}, \underline{B}_1, ..., \underline{B}_J]$ combines the training data of the desired and all interfering users. The matrix $\underline{C}^H$ is the Hermitian transposition of $\underline{C}$ and the matrix $\underline{C}^+$ denotes the corresponding pseudo-inverse. The elements of the vector $\underline{y} = \underline{A} \cdot \underline{h} + \sum_{j=1}^{J} \underline{B}_j \cdot \underline{g}_j = \underline{C} \cdot \left[\underline{h}^T, \underline{g}_1^T, \cdots, \underline{g}_J^T\right]$ are the samples of the received signal corresponding to the training data of $\underline{C}$. The number of rows in $\underline{C}$ is the length of the so-called observation interval $N_{obs}$. It can be shown that for orthogonal training sequences the mean squared error is proportional to $\left(L + \sum_{j=1}^{J} L_j + J + 1\right) \cdot N_{obs}^{-1}$, where the first factor is the number of channel coefficients to be estimated. Therefore it is desirable to keep $N_{obs}$ large when using JLSCE. For synchronized training sequences and JLSCE, the length $N_{obs}$ of the observation interval is

$$N_{obs} = N_t - \max\{ L, \max_j \{L_j\}\} , \quad (6)$$

where $N_t$ is the length of the training sequence. If the lengths of all channels are assumed to be equal, i.e., $L=L_j$ the length $N_{obs}$ is the same as in the case without CCI.

In the more realistic case of asynchronous training sequences (items (ii) and (iii) in the list above) and JLSCE, only the overlapping part of the training sequences of all users can be used for JLSCE, and $N_{obs}$ reduces to

$$N_{obs} = N_t - \max\{ L, \max_{j} \{L_j\}\} - \max_{j} \{\Delta_j\} , \qquad (7)$$

where $\Delta_j$ is the shift in symbols of the $j$-th interfering user's training sequence.

Since the shift(s) may be large in asynchronous systems, the length of the observation interval may be small, which leads to a large mean squared error when using JLSCE. Additionally, the receiver has to know or estimate the shifts of the interfering users. In consideration of this, JLSCE appears to be inappropriate in asynchronous networks - even if the shift(s) of the interfering user(s) is/are known by the receiver.

This motivates to interpret the interfering sequences as unknown data, so that the receiver is blind with respect both to the data and to the training sequences of the interfering users. Such a receiver is referred to as semi-blind. This case is equivalent to the last item in the list above (worst case). Note that for a semi-blind approach, a shift estimation is not required.

## Iterative Semi-Blind Decision-Directed Channel Estimation

In the following, an iterative semi-blind algorithm based on a combination of the VA and the LMS algorithm [22] is presented. We introduce the proposed receiver for $J$=1 interfering user and one receiving antenna. The receiver structure can easily be extended to take more interfering users into account or to make use of antenna diversity. It can be used in any TDMA mobile radio system. However, the specific implementation below is based on the popular GSM system [24].

## Initial Channel Estimation

The first step of the algorithm is an initial estimation of the channel coefficients $\underline{h}$ and $\underline{g}$. For the desired user's channel the initial estimation is done, e.g., by calculating the least squares channel estimation (LSCE) with the known symbols of the training sequence using (5) without consideration of the interfering user, i.e., the data matrix $\underline{C}$ reduces to $\underline{A}$. Consequently, this initial estimate is corrupted by CCI.

The *expanding* method described above is used for an efficient estimation of the channel coefficients. In the first iteration, only the 2 middle channel taps are updated, while in the second iteration all 4 channel taps are updated, and so on.

## Joint Data and Channel Estimation

In order to perform joint data and channel estimation, we propose to integrate an adaptive channel estimator into a JVD. Adaptive channel estimation is done (i) to improve the noisy estimates of the channel coefficients of the desired user, (ii) to acquire the channel coefficients of the interfering user(s), and (iii) to track the CIR of slowly time-varying channels.

In the following, we use the LMS algorithm for adaptive channel estimation due to its simplicity compared to more sophisticated adaptive channel estimators. The update is done in a decision-directed fashion. Good results have been obtained by using the most likely survivor as a tentative decision of the data sequences $\{a(k)\}$ and $\{b(k)\}$ in conjunction with a small delay $\delta$. Alternatively, one may use per survivor processing (PSP) [25] or LVA [18] to provide tentative decisions of the data sequences.

Let
$$\underline{\tilde{a}}_{v,\mu}(k+1) = \left[\tilde{a}_{v,\mu}(k+1), \tilde{a}_{v,\mu}(k), \cdots, \tilde{a}_{v,\mu}(k-L+1)\right]^T \text{ and}$$

$$\underline{\tilde{b}}_{v,\mu}(k+1) = \left[\tilde{b}_{v,\mu}(k+1), \tilde{b}_{v,\mu}(k), \cdots, \tilde{b}_{v,\mu}(k-L+1)\right]^T \qquad (8)$$

be the hypotheses of the transmitted data symbol sequences for time index ($k$+1) corresponding to the respective state transition from state $v$ to state $\mu$. Let $\underline{h}(k)$ and $\underline{\hat{g}}(k)$ be the channel estimates for time index $k$. Then joint data and channel estimation is done as follows:

1) Calculate the branch metrics of the transition from state $v$ at time index $k$ to state $\mu$ at time index $k+1$:

$$\gamma_{v,\mu}(k+1) = \left| y(k+1) - \underline{\hat{h}}^{T}(k) \cdot \underline{\tilde{a}}_{v,\mu}^{T}(k+1) - \underline{\hat{g}}^{T}(k) \cdot \underline{\tilde{b}}_{v,\mu}^{T}(k+1) \right|^{2} \; . \qquad (9)$$

2) Calculate the path metrics for all transitions at time index $k+1$:

$$\Gamma_{v,\mu}(k+1) = \Gamma_{v}(k) + \gamma_{v,\mu}(k+1) \; . \qquad (10)$$

3) Determine the best path for every state $\mu$ at time index $k+1$:

$$\Gamma_{\mu}(k+1) = \min_{v} \{\Gamma_{v,\mu}(k+1)\} \; , \qquad (11)$$

i.e., let only the best branch per state survive.

4) The most likely survivor is traced back $\delta$ symbols to obtain the tentative decisions $\underline{\hat{a}}(k-\delta)$ and $\underline{\hat{b}}(k-\delta)$, respectively. The decision delay $\delta$ is a design parameter of the algorithm. The choice of $\delta$ is based on a trade-off between the quality of the tentative decisions and the tracking capability.

5) The channel estimates are updated using the LMS algorithm:

$$\underline{\hat{h}}(k+1) = \underline{\hat{h}}(k) + \Delta(k) \cdot e(k) \cdot \underline{\hat{a}}^{*}(k-\delta) \qquad (12)$$

$$\underline{\hat{g}}(k+1) = \underline{\hat{g}}(k) + \Delta(k) \cdot e(k) \cdot \underline{\hat{b}}^{*}(k-\delta) \; , \qquad (13)$$

where $e(k) = y(k-\delta) - \left[ \underline{\hat{h}}^{T}(k) \cdot \underline{\hat{a}}^{T}(k-\delta) + \underline{\hat{g}}^{T}(k) \cdot \underline{\hat{b}}^{T}(k-\delta) \right]$ is a common error signal and $\Delta(k)$ is the step size of the algorithm, which may be time-varying.

6) Increment the time index and go to step 1) until the end of the burst is reached.

**Iterative Update Process**

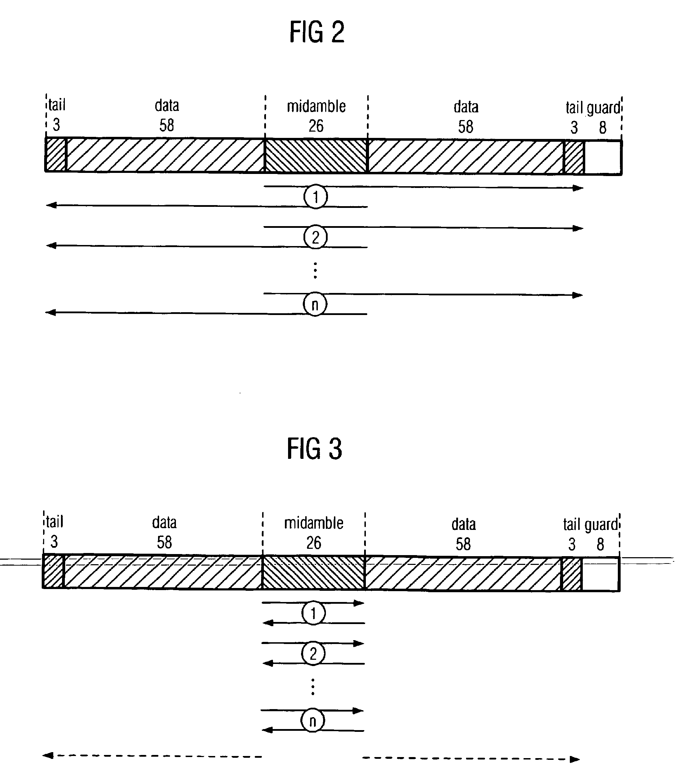

The proposed method can be used in conjunction with an arbitrary burst structure. We use the GSM normal burst structure as an example, which consists of (from the left to the right) 3 tail-, 58 data-, 26 midamble-, 58 data-, 3 tail-and 8 guard-symbols (see Fig. 2). An application to other burst structures can be implemented in a similar way. According to the GSM test specifications, the whole burst is assumed to be corrupted by one dominating interferer, whose data sequence is a pseudo-noise sequence without burst structure. The initial channel estimate is determined according to the section 'Initial Channel Estimation'. Then, channel and data estimation for both the desired and the interfering user are performed based on the algorithm described in section "Joint Data and Channel Estimation".

**Parallel Channel Estimation and Data Detection**

The update process of the first iteration begins at the left end of the midamble and continues to the right end of the burst in a forward recursion. This is illustrated in Fig. 2. After the end of the burst is reached, the last channel estimate is stored and is used as initial channel estimate for the following update process proceeding from the right end of the midamble to the left end of the burst in a backward recursion. The last channel estimate is again stored and can be used as an initial estimate for further iterations. One iteration consists of one forward recursion and one backward recursion. The total number of iterations is denoted by n. The final decision on the user's data sequence corresponds to the most likely survivor after the last iteration. Notice that data of desired user and interfering user are detected during each update process.

Notice that for the midamble data (training sequence) as well as the tail bits of the desired user, $\underline{\tilde{a}}_{v,\mu}(k)$, $\underline{\hat{a}}_{v,\mu}(k)$ in equations (8) - (13) are known and not need to be estimated. The other data and the CIR of the desired user and interfering user need to be estimated. This is why the proposed channel estimation method is semi-blind.

## Sequential Channel Estimation and Data Detection

Another less complex way is that the update (iteration) process is predominately limited within the midamble (the training sequence) of the desired user. Instead of joint channel estimation and data detection in parallel, the channel estimation and data detection are separated into two parts, as shown in Fig. 3. The CE is carried out over the midamble. After the channel coefficients of the desired user and interfering user are jointly determined through iterations over the midamble, the data of the desired user as well as the interfering user (as by-product) over the whole burst are then jointly detected.

Since data detection for the whole burst is done only once (after CE) in comparison with $n$ times in the parallel CE and data detection, less computational efforts are required. Another advantage of the sequential CE and data detection is its good performance also in the case of no interferer. This can be useful especially when the cochannel interferer is not always present.

In a pure noisy environment (e.g. no dominant interferer, or two many interferers), the joint CE and data detection algorithm, if applied, will in general cause a performance degradation. A criteria can be derived which decides after the blind interferer channel estimation whether a conventional algorithm (VA) or a joint algorithm (JVD) will be used for data detection. During data detection a symbol-by-symbol update of the channel coefficients using the LMS algorithm as described above is not necessary.

## Reduced State VA for Channel Estimation

Due to the nature of iteration, reduced number of channel taps can be estimated in early iterations. I.e. some of the channel taps are set to zeros in the early iterations and need not to be estimated. In this case, a reduced state VA can be employed which needs much less computational requirements than the full state VA.

## Phase and Shift Ambiguity

As the receiver is completely blind w.r.t. the interfering user's signal and the corresponding channel, the receiver uses joint hypotheses of data and channel. Some combinations of hypotheses $\underline{\tilde{B}}_j$ and $\underline{\tilde{g}}_j$ lead to the same product $\underline{\tilde{B}}_j \cdot \underline{\tilde{g}}_j$ in (4). The ambiguity of the combination of $\underline{\tilde{B}}_j$ and $\underline{\tilde{g}}_j$ can be classified as follows:

## Phase Ambiguity

For BPSK, the condition $\underline{\tilde{B}}_j \cdot \underline{\tilde{g}}_j = (-\underline{\tilde{B}}_j) \cdot (-\underline{\tilde{g}}_j)$ is known as *phase ambiguity*. The estimated interferer sequence adapts to the phase shift of the channel estimate, or vice versa. For our purposes, this ambiguity is not crucial as we are neither directly interested in the correct phase of the interfering user's data sequence nor the corresponding channel estimates.

## Shift Ambiguity

If both hypotheses of interfering data and corresponding channel are shifted by the same number of symbols in time, the joint estimate is the same for the shifted and the unshifted case. This is referred to as *shift ambiguity*. The mutual adaptation of the estimates is similar to the case of phase ambiguity. As opposed to phase ambiguity, shift ambiguity should be prevented due to the finite channel memory length used for CE. A shifted version of the CIR might cause residual ISI which leads to a performance loss.

One approach to treat shift ambiguity has been described in [26] and is referred to as extended *window algorithm*. The main idea is to consider a channel memory larger than $L$. This prevents a loss of channel coefficients but requires more computational efforts. The channel update is done considering the larger memory and a dominant subset of $L+1$ consecutive coefficients is chosen as the new channel estimate.

Another approach has been presented in [27]. Here the receiver sets up hypotheses of the shift and estimates the most likely shift. An alternative approach described here is referred to as *centering*. After each iteration, the tap with the largest power is determined for the interfering user. If the first tap appears to be the dominant tap, the estimated CIR is shifted to the right by one position. If the last tap appears to be the dominant tap, the estimated CIR is shifted to the left by one position. The iteration is repeated after centering. Centering is done not more than once per iteration. Note that centering does not increase the memory length $L$. This prevents an additional estimation error. Furthermore, the start indices for forward and backward recursion do not have to be changed. This prevents a shorter iteration process during the midamble. It should be noted that centering does not necessarily combat the shift ambiguity completely. It merely makes sure that the dominant tap is included in the estimated CIR.

The more efficient method to treat shift ambiguity is our proposed method , refered to as *expanding.*

As mentioned above, the basic idea is to start the estimation with a reduced channel length and increase the number of channel taps with each iteration. E.g. as shown in Fig. 1, we have a channel with memory length $L$ = 3 (i.e. the channel has $L$+1 = 4 taps). In the first iteration, only the 2 middle channel taps are updated, while in the second iteration all 4 channel taps are updated. In other words, we pad up in the second iteration the two tap CIR with two zeros on the left and right side, resulting in 4 channel coefficients. These 4 channel coefficients are then used as initial estimation of the channel coefficients in the second iteration.

Due to the expanding process the dominant taps will be automatically included in the estimated CIR. As such, better convergence and overall performance can be achieved.

The proposed method has been successfully employed in the interference cancellation using iterative semi-blind channel estimation. Very promising results have been obtained.

## References

[1] C. Tidestav, M. Sternad, and A. Ahlen, "Reuse within a cell - interference rejection or multiuser detection?," IEEE Trans. Commun., vol. 47, pp. 1511-1522, Oct. 1999.

[2] J.-W. Liang, J.-T. Chen, and A. Paulraj, "A two-stage hybrid approach for CCI/ISI reduction with space-time processing," IEEE Commun. Lett., vol. 1, pp. 163-165, Nov. 1997.

[3] J.-W. Liang, J.-T. Chen, and A. Paulraj, "A space-time-filtered Viterbi receiver for CCI/ISI reduction in TDMA systems," Circuits, Systems and Signal Processing, vol. 17, pp. 85-102, Feb. 1998.

[4] P. Wong and D. Cox, "Low-complexity diversity combining algorithms and circuit architectures for co-channel interference cancellation and frequency-selective fading mitigation," IEEE Trans. Commun., vol. 44, pp. 1107-1116, Sept. 1996.

[5] S. Ariyavistakul, J. Winters, and N. Sollenberger, "Joint equalization and interference suppression for high data rate wireless systems," IEEE J. Select. Areas Commun., vol. 18, pp. 1214-1220, July 2000.

[6] M. Clark, L. Greenstein, andW. Kennedy, "MMSE diversity combining for wide-band digital cellular radio," IEEE Trans. Commun., vol. 40, pp. 1128-1135, June 1992.

[7] C. Despins, D. Falconer, and S. Mahmoud, "Compound strategies of coding, equalization, and space diversity for wideband TDMA indoor wireless channels," IEEE Trans. Veh. Technol., vol. 41, pp. 369-379, Nov. 1992.

[8] H. Yoshino and H. Suzuki, "Interference cancelling characteristics of DFE transversal-combining diversity in mobileradio environment-comparisons with metric-combining schemes," Electronics and Communications in Japan, Part 1, vol. 77, no. 9, pp. 85-98, 1994.

[9] S. Ratnavel and A. Paulraj, "MMSE space-time equalization for GSM cellular systems," in 46th IEEE Vehicular Technology Conference, pp. 331-335, 1996.

[10] B. Petersen and D. Falconer, "Suppression of adjacent-channel, cochannel, and intersymbol interference by equalizers and linear combiners," IEEE Trans. Commun., vol. 42, pp. 3109-3118, Dec. 1994.

[11] H. Trigui and D. Slock, "Cochannel interference cancellation within the current GSM standard," in Proc. IEEE ICUPC'98, pp. 511-515, 1998.

[12] K. Giridhar, S. Chari, J. Shynk, R. Gooch, and D. Artman, "Joint estimation algorithms for cochannel signal demodulation," in Proc. IEEE ICC '93, Geneva, pp. 1497-1501, May 1993.

[13] K. Giridhar, J. Shynk., A. Mathur, S. Chari, and R. Gooch, "Nonlinear techniques for the joint estimation of cochannel signals," IEEE Trans. Commun., vol. 45, pp. 473-484, Apr. 1997.

[14] W. Etten, "Maximum likelihood receiver for multiple channel transmission systems," IEEE Trans. Commun., vol. 24, pp. 276-283, Feb. 1976.

[15] S. Verdu, "Optimum multiuser asymptotic efficiency," IEEE Trans. Commun., vol. 34, pp. 890-897, Sept. 1986.

[16] J.-T. Chen, J.-W. Liang, H.-S. Tsai, and Y.-K. Chen, "Low-complexity joint MLSE receiver in the presence of CCI," IEEE Commun. Letters, vol. 2, pp. 125-127, May 1998.

[17] P. Ranta, A. Hottinen, and Z.-C. Honkasalo, "Co-channel interference cancellation receiver for TDMA mobile systems," in Proc. IEEE ICC '95, Seattle, pp. 17-21, June 1995.

[18] B. Lo and K. Letaief, "Adaptive equalization and interference cancellation for wireless communication systems," IEEE Trans. Commun., vol. 47, pp. 538-545, Apr. 1999.

[19] N. Seshadri and C.-E. Sundberg, "Generalized Viterbi algorithm for error detection with convolutional codes," in Proc. GLOBECOMM '89, Dallas, pp. 43.3.1-43.3.4, 1989.

[20] N. Seshadri and C.-E. Sundberg, "List Viterbi decoding algorithms with applications," IEEE Trans. Commun., vol. 42, pp. 313-323, Feb./Mar./Apr. 1994.

[21] G.-O. Glentis, K. Berberidis, and S. Theodoridis, "Efficient least squares adaptive algorithms for FIR transversal filtering," IEEE Signal Processing Mag., vol. 16, pp. 13-41, July 1999.

[22] J. Proakis, Digital Communications. McGraw-Hill, 4 ed., 2000.

[23] G. Forney, Jr., "The Viterbi algorithm," Proc. IEEE, vol. 61, pp. 268-278, Mar. 1973.

[24] 3GPP, Digital Cellular Telecommunications System (Phase 2+). TS 45.01 - 45.05, http://www.3gpp.org.

[25] R. Raheli, A. Polydoros, and C.-K. Tzou, "Per-survivor processing: a general approach to MLSE in uncertain environments," IEEE Trans. Commun., vol. 43, pp. 354-364, Feb./Mar./Apr. 1995.

[26] R. Lopes and J. Barry, "Blind iterative channel identification and equalization," in Proc. IEEE ICC'01, Helsinki, pp. 2256-2260, June 2001.

[27] X.-M. Chen and P. Hoeher, "Blind turbo equalization for wireless DPSK systems," in Proc. 4th Int. ITG Conf. on Source and Channel Coding, Berlin, pp. 371-378, Jan. 2002.

## Claims

1. Method for iterative estimation of L+1 channel coefficients ($\underline{h},\underline{g}$) where h represents the channel coefficients of the desired user and g represents the channel coefficients of the interfering user, of a channel for a burst of fixed length comprising at least a mid-amble part, **characterized in that** a first number M<L+1 of desired user's channel coefficients ($\underline{h}$) are initially estimated using a least squares channel estimation algorithm and a second number N=(L+1)-M of desired user's channel coefficients are set to zero; and

   that the M desired user's channel coefficients initially estimated and the N desired user's channel coefficients set to zero are used as initial estimates of desired user's channel coefficients ($\underline{h}$), wherein the estimates ($\hat{\underline{h}}$, $\hat{\underline{g}}$) of the channel coefficients ($h,g$) are iteratively updated using an LMS algorithm defined by the equations:

$$\hat{\underline{h}}(k+1)=\hat{\underline{h}}(k)+\Delta(k)e(k)\hat{\underline{a}}^*(k-\delta);$$

   and

$$\hat{\underline{g}}(k+1)=\hat{\underline{g}}(k)+\Delta(k)e(k)\hat{\underline{b}}^*(k-\delta)$$

   where k is the time index, $\underline{a}^*(k-\delta)$ and $\hat{\underline{b}}^*(k-\delta)$ are tentative decisions of the data sequences of desired users and interferers respectively, e(k) is a common error signal, $\Delta(k)$ is the step size of the LMS algorithm and $\delta$ is a decision delay, wherein the iterative update is iterated over the length of the mid-amble part of the burst.

2. Application of a method according to claim 1 in channel equalization.

3. Application of a method according to claim 1 in interference cancellation.

## Patentansprüche

1. Verfahren zur iterativen Abschätzung von L+1 Kanalkoeffizienten ($\underline{h}$, $\underline{g}$), wobei h für die Kanalkoeffizienten des erwünschten Anwenders steht und g für die Kanalkoeffizienten des interferierenden Anwenders steht, eines Kanals für einen mindestens einen Midamble-Teil beinhaltenden Burst fester Länge, **dadurch gekennzeichnet, dass** eine erste Anzahl an M < L+1 Kanalkoeffizienten ($\underline{h}$) des erwünschten Anwenders anfänglich unter Verwendung eines Kanalabschätzungsalgorithmus nach dem Verfahren der kleinsten Quadrate abgeschätzt werden und eine zweite Anzahl an N = (L+1) - M Kanalkoeffizienten des erwünschten Anwenders zu Null gesetzt werden; und

   dass die M anfänglich abgeschätzten Kanalkoeffizienten des erwünschten Anwenders und die N zu Null gesetzten Kanalkoeffizienten des erwünschten Anwenders als Anfangsabschätzungen für die Kanalkoeffizienten ($\underline{h}$) des erwünschten Anwenders verwendet werden, wobei die Abschätzungen ($\underline{h}$, $\hat{g}$) der Kanalkoeffizienten ($\underline{h}$, $g$) unter Verwendung eines durch die Gleichungen:

$$\hat{\underline{h}}(k+1) = \underline{\hat{h}}(k) + \Delta(k)e(k)\underline{\hat{a}}^*(k-\delta);$$

und

$$\hat{\underline{g}}(k+1) = \underline{\hat{g}}(k) + \Delta(k)e(k)\underline{\hat{b}}^*(k-\delta)$$

(wobei k der Zeitindex ist, $\underline{a}^*(k\text{-}\delta)$ und $\underline{\hat{b}}^*(k\text{-}\delta)$ vorläufige Entscheidungen über die Datensequenzen von erwünschten bzw. interferierenden Anwendern sind, e(k) ein allgemeines Fehlersignal ist, $\Delta(k)$ die Schrittgröße des LMS-Algorithmus ist und $\delta$ eine Entscheidungsverzögerung ist) definierten LMS-Algorithmus iterativ aktualisiert werden, wobei die iterative Aktualisierung über die Länge des Midamble-Teils des Bursts iteriert wird.

**2.** Anwendung eines Verfahrens nach Anspruch 1 in Kanalequalisierung.

**3.** Anwendung eines Verfahrens nach Anspruch 1 in Interferenzlöschung.

**Revendications**

**1.** Procédé d'estimation par itérations de L + 1 coefficients de canal ($\underline{h}$, $\underline{g}$), où h représente les coefficients de canal de l'utilisateur désiré et g représente les coefficients de canal de l'utilisateur brouilleur, d'un canal pour une salve de longueur fixe comprenant au moins une partie de midamble, **caractérisé par le fait qu'**un premier nombre M < L + 1 de coefficients de canal ($\underline{h}$) de l'utilisateur désiré sont initialement estimés à l'aide d'un algorithme d'estimation de canal par moindres carrés et un second nombre N=(L+1)-M de coefficients de canal de l'utilisateur désiré sont configurés à zéro ; et **par le fait que** les M coefficients de canal de l'utilisateur désiré initialement estimés et les N coefficients de canal de l'utilisateur désiré configurés à zéro sont utilisés en tant qu'estimations initiales de coefficients de canal ($h$) de l'utilisateur désiré, les estimations ($\underline{h}$, $\hat{g}$) des coefficients de canal ($\underline{h}$, $g$) étant actualisées par itérations à l'aide d'un algorithme LMS défini par les équations :

$$\underline{\hat{h}}(k+1) = \underline{\hat{h}}(k) + \Delta(k)e(k)\underline{\hat{a}}^*(k-\delta);$$

et

$$\underline{a}(k+1) = \underline{\hat{g}}(k) + \Delta(k)e(k)\underline{b}^*(k-\delta)$$ k étant l'indice temporel, $\underline{a}^*(k\text{-}\delta)$ et $\underline{b}^*(k\text{-}\delta)$ étant des décisions tentatives des séquences de données d'utilisateurs désirés et de brouilleurs, respectivement, e(k) étant un signal d'erreur commun, $\Delta(k)$ étant la dimension de pas de l'algorithme LMS et 5 étant un retard de décision, l'actualisation par itérations étant itérée sur la longueur de la partie de midamble de la salve.

**2.** Application d'un procédé selon la revendication 1 dans une égalisation de canal.

**3.** Application d'un procédé selon la revendication 1 dans une élimination d'interférence.

# FIG 1

CIR before iteration 1    CIR after iteration 1    CIR after iteration 2

## FIG 2

| tail 3 | data 58 | midamble 26 | data 58 | tail 3 | guard 8 |

## FIG 3

| tail 3 | data 58 | midamble 26 | data 58 | tail 3 | guard 8 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9608881 A

**Non-patent literature cited in the description**

- Fundamentals of Statistical Signal Processing - Estimation Theory. **STEVEN M. KAY.** ENGLEWOOD CLIFFS. PRENTICE-HALL, INC
- **WON Y K et al.** Variable LMS Algorithms Using the Time Constant Concept. *IEEE TRANSACTIONS ON CONSUMER ELECTRONICS,* 21 June 1994, 300-301
- **BILCU R C et al.** *A new variable length LMS algorithm: theoretical analysis and implementations,* vol. 3, 1031-1034
- **Z. PRITZKER et al.** Variable length stochastic gradient algorithm. *IEEE Transactions on Signal Processing,* 01 April 1991, vol. 39 (4), ISSN 1053-587X, 997-1001
- **C. TIDESTAV ; M. STERNAD ; A. AHLEN.** Reuse within a cell - interference rejection or multiuser detection?. *IEEE Trans. Commun.,* October 1999, vol. 47, 1511-1522
- **J.-W. LIANG ; J.-T. CHEN ; A. PAULRAJ.** A two-stage hybrid approach for CCI/ISI reduction with space-time processing. *IEEE Commun. Lett.,* November 1997, vol. 1, 163-165
- **J.-W. LIANG ; J.-T. CHEN ; A. PAULRAJ.** A space-time-filtered Viterbi receiver for CCI/ISI reduction in TDMA systems. *Circuits, Systems and Signal Processing,* February 1998, vol. 17, 85-102
- **P. WONG ; D. COX.** Low-complexity diversity combining algorithms and circuit architectures for co-channel interference cancellation and frequency-selective fading mitigation. *IEEE Trans. Commun.,* September 1996, vol. 44, 1107-1116
- **S. ARIYAVISTAKUL ; J. WINTERS ; N. SOLLENBERGER.** Joint equalization and interference suppression for high data rate wireless systems. *IEEE J. Select. Areas Commun.,* July 2000, vol. 18, 1214-1220
- **M. CLARK ; L. GREENSTEIN ; W. KENNEDY.** MMSE diversity combining for wide-band digital cellular radio. *IEEE Trans. Commun.,* June 1992, vol. 40, 1128-1135

- **C. DESPINS ; D. FALCONER ; S. MAHMOUD.** Compound strategies of coding, equalization, and space diversity for wideband TDMA indoor wireless channels. *IEEE Trans. Veh. Technol.,* November 1992, vol. 41, 369-379
- **H. YOSHINO ; H. SUZUKI.** Interference cancelling characteristics of DFE transversal-combining diversity in mobile radio environment-comparisons with metric-combining schemes. *Electronics and Communications in Japan,* 1994, vol. 77 (9), 85-98
- **S. RATNAVEL ; A. PAULRAJ.** MMSE space-time equalization for GSM cellular systems. *46th IEEE Vehicular Technology Conference,* 1996, 331-335
- **B. PETERSEN ; D. FALCONER.** Suppression of adjacent-channel, cochannel, and intersymbol interference by equalizers and linear combiners. *IEEE Trans. Commun.,* December 1994, vol. 42, 3109-3118
- **H. TRIGUI ; D. SLOCK.** Cochannel interference cancellation within the current GSM standard. *Proc. IEEE ICUPC'98,* 1998, 511-515
- **K. GIRIDHAR ; S. CHARI ; J. SHYNK ; R. GOOCH ; D. ARTMAN.** Joint estimation algorithms for cochannel signal demodulation. *Proc. IEEE ICC '93, Geneva,* May 1993, 1497-1501
- **K. GIRIDHAR ; J. SHYNK. ; A. MATHUR ; S. CHARI ; R. GOOCH.** Nonlinear techniques for the joint estimation of cochannel signals. *IEEE Trans. Commun,* April 1997, vol. 45, 473-484
- **W. ETTEN.** Maximum likelihood receiver for multiple channel transmission systems. *IEEE Trans. Commun.,* February 1976, vol. 24, 276-283
- **S. VERDU.** Optimum multiuser asymptotic efficiency. *IEEE Trans. Commun.,* September 1986, vol. 34, 890-897
- **J.-T. CHEN ; J.-W. LIANG ; H.-S. TSAI ; Y.-K. CHEN.** Low-complexity joint MLSE receiver in the presence of CCI. *IEEE Commun. Letters,* May 1998, vol. 2, 125-127
- **P. RANTA ; A. HOTTINEN ; Z.-C. HONKASALO.** Co-channel interference cancellation receiver for TDMA mobile systems. *Proc. IEEE ICC '95, Seattle,* June 1995, 17-21

- **B. LO ; K. LETAIEF.** Adaptive equalization and interference cancellation for wireless communication systems. *IEEE Trans. Commun.,* April 1999, vol. 47, 538-545
- **N. SESHADRI ; C.-E. SUNDBERG.** Generalized Viterbi algorithm for error detection with convolutional codes. *Proc. GLOBECOMM '89, Dallas,* 1989, 43.3.1-43.3.4
- **N. SESHADRI ; C.-E. SUNDBERG.** List Viterbi decoding algorithms with applications. *IEEE Trans. Commun.,* February 1994, vol. 42, 313-323
- **G.-O. GLENTIS ; K. BERBERIDIS ; S. THEODORIDIS.** Efficient least squares adaptive algorithms for FIR transversal filtering. *IEEE Signal Processing Mag.,* July 1999, vol. 16, 13-41
- **J. PROAKIS.** Digital Communications. McGraw-Hill, 2000
- **G. FORNEY, JR.** The Viterbi algorithm. *Proc. IEEE,* March 1973, vol. 61, 268-278
- *Digital Cellular Telecommunications System,* 45.01-45.05, http://www.3gpp.org.
- **R. RAHELI ; A. POLYDOROS ; C.-K. TZOU.** Per-survivor processing: a general approach to MLSE in uncertain environments. *IEEE Trans. Commun.,* February 1995, vol. 43, 354-364
- **R. LOPES ; J. BARRY.** Blind iterative channel identification and equalization. *Proc. IEEE ICC'01,* June 2001, 2256-2260
- **X.-M. CHEN ; P. HOEHER.** Blind turbo equalization for wireless DPSK systems. *Proc. 4th Int. ITG Conf. on Source and Channel Coding, Berlin,* January 2002, 371-378